# EUROPEAN PATENT APPLICATION

(11) **EP 1 647 415 A2**
(43) Date of publication of application: **19.04.2006**
(21) Application number: 05002882.8
(22) Date of filing: 11.02.2005
(51) Int. Cl.: B42D 15/10, G03H 1/02, G06K 19/16

(54) **Surface relief holographic recording medium and optical system for its reading**

(30) Priority: 18.10.2004 US 965867
(71) Applicant: European Central Bank, 60311 Frankfurt am Main (DE)
(72) Inventor: Weaver, Samuel P., Boulder, Colorado 80302 (US); McLeod, Robert, Boulder, Colorado 80305 (US); Curtis, Kevin R., Longmont, Colorado 80503 (US); Hill, Adrian J., Lyons, Colorado 80540 (US)
(74) Representative: KEIL & SCHAAFHAUSEN Patentanwälte

(57) **Abstract**

A surface relief holographic recording medium is described, in particular a foil, comprising digital data, wherein the holographic recording medium is a holographic material for recording surface relief holograms (1), in particular by providing a fringe pattern (3). To provide a surface relief hologram which is more difficult to counterfeit, the digital data are recorded with a holographic fringe period being sufficiently small such that the diffracted light from the digital data cannot be seen by human eye. Further, an optical system for reading this hologram is described.

## Description

The present invention relates to storage of data in holographic media. In particular, the present invention relates to a surface relief holographic recording medium, for example a foil, comprising digital data, wherein the holographic recording medium is a holographic material for recording surface relief holograms only, in particular by providing a fringe pattern. In particular, the invention is related to the storage of covert holographic data in an article having a holographic recording medium and an optical system for reading said covert holographic data.

Holography is a familiar technology for displaying three dimensional images. Basically, two coherent light beams are caused to intersect in a holographic medium. An interference pattern or grating pattern results that is unique to the two beams and which is written into the medium. This grating pattern is referred to as the hologram and has the property that if it is illuminated by either of the beams used for recording, the illuminating beam diffracts in the direction of the second writing beam. To an observer, it appears as if the source of the second beam is still present at an observation plane.

There are two significant types of holograms to consider: surface relief holograms and volume holograms. Surface relief holograms act on an incident optical wavefront by imparting a local phase shift which is proportional to the holographic material height at a specific location. In a surface relief hologram, the local optical path length is proportional to the physical path length at a specific location. Volume holograms act on an incident optical wavefront by imparting a local phase shift which is proportional to the index of refraction of the holographic material at a specific location. In a volume hologram, the local optical path length is proportional to the index of refraction at a specific location, while the physical path length does not vary in the holographic material.

Holograms are becoming more common for use in other types of applications such as security and data storage. In data storage applications, as is well understood by those skilled in the art, a page of data is used as a source image and a detector array is placed at the observation plane. Generally, data stored in holographic media is only machine readable.

With respect to security applications, it is well known to include holograms on credit cards to prevent duplication of these items. A hologram is useful in this context because of the relative difficulty involved in counterfeiting a hologram as compared to printed designs, embossed features and even photographs. However, security holograms used on credit cards are generally embossed only on the surface of the card. As such, while holograms in general are relatively difficult to duplicate, a hologram on the surface of a card can be somewhat easier duplicated or altered.

One potential solution to the problems associated with relative ease of duplication of surface holograms is offered in US 6,005,691 disclosing a hologram card which includes a first plastic material formed to include localized topological features constituting a diffractive optical element. The diffractive optical element is structured to generate a hologram image. The hologram card also includes a protective layer which is chemically bonded to and directly contacts the topological features constituting the diffractive optical element. While this hologram card includes a protective layer to make any hologram included in the diffractive element more difficult to duplicate, the card includes only a surface hologram, which holds a relatively small amount of information. That is, the hologram card disclosed is relatively inefficient.

Additionally, while credit cards, drivers licenses and identification cards can typically store some information in a magnetic stripe often included with such cards, the amount of information such magnetic stripes can store is relatively low.

Holographic labels, seals, and markers of all appearances and types are increasingly being used for security applications in diverse areas of activity such as credit card identification, document authentication, currency security, branding of commodities, unique marking of software and pharmaceuticals, and numerous other applications. Within the class of holographic appliqués, the machine-embossed foils most frequently used are called diffractive optically variable image devices (DOVIDs, OVIDs, OVDs). These devices are affixed permanently or semi-permanently to the devices or commodities that they mark, and their bright, three-dimensional appearances attract attention and identify the commodity as genuine. As might be expected, unscrupulous dealers of counterfeit products attempt to replicate these holographic markers to make their products appear genuine. In response, the manufacturers of these holograms have implemented approaches such as hidden or latent images embedded in the visible hologram that can be viewed only with a specialized optical reader. Another feature becoming widely employed within these holograms is machine-readable product identification markings, such as embedded UPC bar codes. Both optical and electron-beam mastering techniques are used to produce these modern holographic foils which multiplex visible images with machine-readable data within a single embossed foil patch.

It is the object of the invention to provide a surface relief hologram which is more difficult to counterfeit and an optical system for reading this hologram.

This object is solved by a surface relief holographic recording medium having the features of claim 1 and a respective optical reading system with the features of claim 9. According to the concept of the invention, digital data containing e.g. verifiable information or other significant data are recorded with a holographic fringe period being sufficiently small such that the diffracted light from the digital data cannot be seen by human eye. According to the invention the covert digital data are contained in the hologram in a non-visible manner for the human eye or optical systems based on visible light. Thus, it is first difficult to find and localize these data in the hologram. Second, the reading of this data is impossible as long as the wavelength of the diffracted light is not known. Therefore, it is very difficult to counterfeit holograms containing digital data not detectable within the range of visible light. However, is it easy to read this technical data with an optical system adapted to the covert data, as claimed in claim 9. Preferably, the digital data is written using modulation fringes which only diffract light that cannot be seen by human eye and require reconstruction using tilted plane imaging.

According to a preferred embodiment of the invention, the digital data is patterned or formatted in a two-dimensional page format, in particular as a two-dimensional image, as a full page of digital data or as a series of digital data readable by a scanner. Thus, much information can be contained in the covert digital data. This data might be descriptive for an article, the hologram is attached to. Preferably, the digital data is machine readable holographic data to allow an automatic verification of the holograms. This is important e.g. for checking banknotes for counterfeit money. For example, the digital data can be arranged in bitwise pattern such that for reading the digital data a compact disk optical head or similar can be used.

To enhance the security, the digital data can be further holographically encoded, in particular using phase, amplitude or both, e.g. by a reference beam which is not a plane wave. Thus, an encoded readout beam is required to reconstruct the digital data. In this case, the encoding refers to e.g. optically recording a fringe pattern or calculating an appropriate fringe pattern for direct writing with an electron beam using a reference beam which is not a plane wave. An example would be a custom piece of glass which introduces known distortions to a propagating plane wave during the reading process. Only using this distorted beam to illuminate the hologram will reconstruct the data page, while using any other phase front to illuminate the hologram will inaccurately reconstruct the data page. Such phase-encoded hologram is even more difficult to counterfeit.

According to a further embodiment of the invention, the digital data are reconstructable only by ultraviolet (UV) light. Thus, the digital data are recorded and read by UV light.

To enhance the capacity of the hologram and to make it more difficult to identify the structure of the digital data, multiple data sections for storing the digital data and/or other information might be provided in the holographic recording medium, the other information being preferably visible to the human eye. Preferably, the digital data includes spatially multiplexed holographic data. The other information might comprise a visible image. In particular, the visible image is a hologram that diffracts light that is both visible and invisible to the human eye.

According to one embodiment of the invention, the digital data is multiplexed in substantially a same location as that of an image hologram visible to human eye. In a simple case, this interlacing of the different information (data/pictures) can be implemented spatially using a checkerboard or chessboard pattern, the fields of which being contributed alternation to one or the other information. However, other methods of interlacing are suited as well.

The hologram according to the invention can advantageously be used for security applications. In this case, the surface relief holographic medium can be comprised in an article, in particular a document, a card, a merchandise or a banknote. The article comprises a patch capable of being attached to a document, a card, a banknote or merchandise to attach the hologram to the article. However, the digital data is preferably written into the holographic recording medium before assembling components of the medium into the article.

The article might comprise a substrate layer, a transparent protective layer overlaying the holographic recording medium, a laminating layer overlaying the protective layer and/or modulation marks for timing and/or positional servo.

In order to provide a method of authentication for the surface relief holographic recording medium or the article having same according to the present invention, an optical system for reading the digital data contained is suggested having a light source for illuminating the hologram and a detector for diffracted data beam reconstruction. The light of the light source is invisible to the human eye, e.g. UV light. Thus, it is difficult to find and read the data without that specific optical system adapted to the hologram according to the invention. The digital data might be arranged in one embodiment of the invention in a bitwise pattern for reading the digital data e.g. by a compact disk optical head. According to another embodiment, the digital data is arranged as a single bar code, which is read out time-serially via a point photo detector as the hologram is passed through the optical reader system. Further, the digital data can be arranged as a plurality of bar codes, which are read out in parallel and time-serially via a linear array of photo detectors as the hologram is passed through the optical reader system.

The optical system comprises preferably a combination of cylindrical and/or spherical imaging optical elements. In particular, the optical system comprises a spherical afocal telescopic system. In this case, the beam of a two-dimensional reconstructed image is passed through an intervening optical system built by said spherical afocal telescopic system comprising a multiplicity of optical elements. These elements might be two spherical optical lens groups, positioned physically to bring the focal positions of the two spherical optical lens groups into coincidence. In one variation, a cylindrical imaging telescope is employed with an orthogonal-oriented single cylindrical lens for improved light efficiency. In another variation, a combination of cylindrical and spherical imaging optical elements is employed.

If the digital data is written using modulation fringes which require reconstruction using tilted-plane imaging, the optical system comprises a the tilted plane imaging system. In such system, an input image and an output image are tilted to the optical axis of the tilted plane imaging system. This tilted plane imaging system is well suited, if the digital data is arranged in a pagewise fashion.

Preferably, the tilted plane imaging system is configured so that the input image and the output image are substantially distortion-free. Further, a readout beam of the input image is substantially parallel to a data diffraction beam of the output image and/or a specular reflection beam of the reconstruction beam is at an angle with respect to the data diffraction beam. This angle can be in the range of about 20 degrees to about 160 degrees. In one variation, the tilted plane imaging system can produce a logo diffraction beam of a logo on an article comprising the hologram.

According to a preferred embodiment of the invention, the optical system comprises an encoded beam readout. This might be the same optical phase decoding element used for encoded writing of the digital data to the hologram.

Developments, advantages and possible applications of the invention follow from the description below of exemplary embodiments and from the drawing. In this case, all features described and/or shown diagrammatically belong to the subject matter of the invention on their own or in any desired combination irrespective of their compilation in the claims or what they refer back to.

### In the drawing:

- Fig. 1: shows a tilted-plane reader system for invisible data holograms with spherical optics and a 2D parallel output. This format is for two-dimensional pagewise digital data.
- Fig. 2: shows a tilted-plane reader system for invisible data holograms with spherical optics and a 1D linear output. This format is for two-dimensional barcode digital data.
- Fig. 3: shows a reader system for invisible data holograms with spherical and cylindrical optics and a 1D linear output. This format is for two-dimensional barcode digital data and could be light-efficient.
- Fig. 4: shows a tilted-plane reader system for invisible data holograms with spherical optics and a 2D parallel output. This format is for two-dimensional pagewise digital data. This system employs an optical phase element to reconstruct a data hologram whose fringe patterns have been encrypted with optical phase to make them more difficult to reconstruct.
- Fig. 5: shows a tilted-plane reader system for invisible data holograms with spherical optics and a 1D linear output. This format is for two-dimensional barcode digital data. This system employs an optical phase element to reconstruct a data hologram whose fringe patterns have been encrypted with optical phase to make them more difficult to reconstruct.
- Fig. 6: shows a reader system for invisible data holograms with spherical and cylindrical optics and a 1D linear output. This format is for two-dimensional barcode digital data and could be light-efficient. This system employs an optical phase element to reconstruct a data hologram whose fringe patterns have been encrypted with optical phase to make them more difficult to reconstruct.
- Fig. 7: shows a model of a single-lens imaging system used in a parallel plane hologram geometry.
- Fig. 8: shows an input object and an output image for single-lens imaging of conventional hologram demonstrating good imaging performance. The output grid is not distorted.
- Fig. 9: shows a model of a single-lens imaging system applied to the high-covertness foil image plane, in this case tilted at a 35 degree angle from the normal.
- Fig. 10: shows an object plane and a processed image plane illustrating distortion of tilted planes by a single-lens imaging system. The output grid is distorted.
- Fig. 11: shows a two-lens telescope applied to the parallel plane geometry, with parallel object and image planes.
- Fig. 12: shows an object plane and a distortion-free image plane of a conventional hologram in a two-lens system. The output grid is not distorted.
- Fig. 13: shows an input object plane and an output image plane of a high-covertness data hologram, in this case imaged without position-dependent magnification.
- Fig. 14: shows an object plane and a distortion-free image plane of a high-covertness hologram in a two-lens system. The output grid is not distorted.
- Fig. 15: shows an optical system layout of a laboratory test system used to validate the performance of conventional and high-covertness foils. This system imaged test foils in both conventional and high-covertness geometries, using both 1D and 2D data formats.
- Fig. 16: shows a multiplexed digital image pattern according to the present invention.

An embodiment of this invention relates to a surface relief holographic recording medium 1 comprising digital data contained within the surface relief holographic recording medium 1 (hologram) that cannot be seen by human eye. In particular, the hologram 1 is comprised in an article. A preferred article in accordance with the present invention includes a multi-layer holographic structure such as a card, a patch, or appliqué having sections for containing holographic machine readable data as well as for containing security and/or presentation information which may be either machine or human readable and may also be holographic.

The article, in particular the hologram 1, of this invention is preferably constructed of multiple layers and preferably includes at least a data layer and a protective layer overlaying the data layer. By including the protective layer, information placed in the data layer can not be altered without removing the protective layer, thereby destroying the article and hologram 1 of this invention.

In this way, information placed in the data layer is advantageously more secure than if the protective layer was not provided. The article of this invention could be small (e.g. stamp sized) or large (e.g. book size). Additionally, while the article of this invention might be in the form of a rectangle, a hologram 1 of this invention in accordance with the present invention can be any shape including, without limitation, a square, circle, triangle or toroid. Deterring counterfeiting would be important for applications such as drivers' licenses, credit cards, ID cards, banknotes or content distribution.

Multiplexed digital image patterns can be used to store information that is relatively difficult to replicate. This can advantageously make such an article of this invention relatively difficult to counterfeit. Digital data is contained in a surface relief hologram layer 2. Additional holographic data can include, without limitation, images of the user; fingerprint, voice or other user biometric data; and/or holographic patterns to make the article difficult to copy. In addition, the article could have presentation data in a presentation/security section of the article. The presentation data can include, without limitation, a company name, company logo, user name, and user contact information. Some or all of this information can also be included in a holographic material layer 2 in non-holographic form. For example, without limitation, a company logo or user contact information could be included in non-holographic form while other presentation/security information could be included in holographic form.

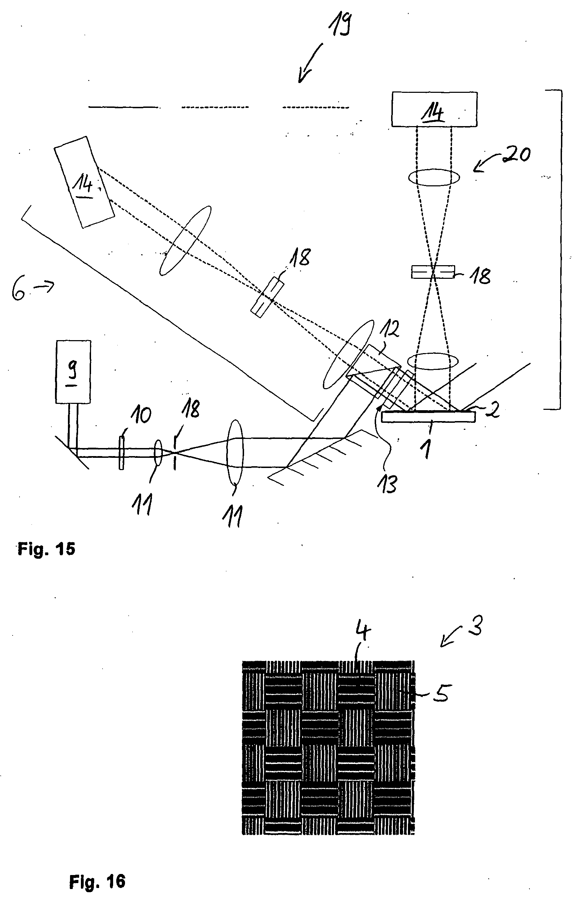

A schematic example for a multiplexed image pattern 3 of the surface relief hologram layer 2 having visible and non visible data is shown in Fig. 16. These data are spatially multiplexed or interlaced using a checkerboard or chessboard pattern. One fringe pattern is written on the one type of squares (e.g. white squares in the picture of a chessboard), and the second fringe pattern is written on the other type of squares (e.g. black squares in the picture of a chessboard). This is a simple case of multiplexed data in a spatial arrangement. However, the invention is not limited to a 50/50 split between the two fringe patterns, since a display hologram could use 90% of the area for hologram brightness, and 10% of the area might be sufficient for the data hologram. Also, other geometric arrangements are possible.

In the example of Fig. 16, the horizontal fringes 4 comprise the visible data, and the vertical fringes 5 comprise the digital data page. The vertical fringes 5 comprising the data hologram are at a much higher spatial frequency than the horizontal fringes 4 which comprise the visible hologram. Thus, the horizontal fringes 4 and the vertical fringes 5 work with light of different wavelengths, only one lying in the visible range. Thus, the digital data contained in the vertical fringes are not visible for the human eye.

A method of making a holographic multi-layer structure having multiple layers in accordance with the present invention is disclosed in US 5,932,045 which is hereby incorporated by reference herein in its entirety. It is possible for the adherent to be photocurable or otherwise curable, e.g., radiation or chemical curable. Heat may be used to accelerate a radiation cure. When using the above method, it is preferable for the adherent to be a material that undergoes a phase transformation, e.g., liquid to solid, to attain a desired adherence. As used herein, the terms cure and curable are intended to encompass materials that gel or solidify by any such methods. Photocurable adherents include materials that cure upon exposure to any of a variety of wavelengths, including visible light, UV light, and x-rays. It is also possible to use adherents that are curable by electron or particle beams.

Protective layer and substrate layer of the article of this invention can be fabricated from either the same or different materials. The materials from which protective layer and substrate layer can be formed include, without limitation, ceramics (including glasses), silicon, metals, polycarbonate, polymethylmethacrylate, or acrylic, or plastics. In addition to self supporting substrates such as glass plates, it is possible for the substrate to be a polymeric material that is sprayed onto a holder, a thin polymer film, or a polymer sheet such as polycarbonate. It is also considered that a polymeric material or film be combined with a self supporting material such as a glass plate to form a single substrate. Either or both protective layer and substrate layer may be an optical article such as, without limitation, a polarizer, half or quarter wave plate, neutral density filter, birefrengement plate, or diffractive optic.

The article could also have a laminating layer that is preferably transparent and can be made from the same material as the protective layer discussed above. The article could have a non-holographic layer that can be fabricated from any suitable material depending upon the nature of the non-holographic data contained therein. For example, without limitation, if the non-holographic layer could be a photograph, the fabrication material would be a photographic or printed paper or emulsion. If the non-holographic layer is text data or a printed symbol, the fabrication material could be printed paper or plastic.

The card, patch, merchandise or banknote shaped article of the preferred embodiment can be manufactured in substantially the same way as the article of this invention discussed above. In particular, substrate layer, holographic media layer 2 and protective layer can be laminated. Then, a non-holographic layer can be placed on or in the protective layer as is well understood by those skilled in the art and a laminating layer can be placed thereover, as is also well understood by those skilled in the art.

In order to produce a holographic security foil, a visible image and/or a concealed (latent) image and/or a data pattern are designed. If optical methods are used to construct the initial holographic master, then masks or models of each constituent portion of the final hologram are constructed, and an optical hologram is exposed which combines all of the desired imagery in a single holographic master. This master is composed of surface relief structures called fringe patterns 3 that reconstruct the desired images upon illumination with light of the appropriate properties. If a direct fringe writing approach (such as an electron beam machine) is to be used to create the initial holographic masters, a fringe pattern 3 is calculated for each of the constituent images, and these patterns are combined with an appropriate algorithm and used to drive the writing apparatus. The resulting master is similarly composed of surface relief structures called fringe patterns 3 that reconstruct the desired images upon illumination with light of the appropriate properties, though the fringe patterns 3 produced with the direct-writing approach will usually have different characteristics than those produced with an optical approach. Using the direct fringe writing approach, a common technique for spatially multiplexing multiple holographic images in substantially the same location is called interlacing. This technique is realized by dividing up the holographic area into sections substantially smaller than the overall hologram area, and then constructing fringe patterns 3 for each data or display hologram which occupy only a portion of the sections (see Fig. 16).

One embodiment of this invention relates to a particular design approach for security holograms 1 that enables data and images to be stored which are entirely invisible when viewed by the human eye. These highly covert data and images can be embedded within a visible holographic image, and can be multiplexed with any other security hologram data storage or imaging approach employed currently.

A particular class of optical reader system 6 could be used to reconstruct holograms 1 that are fabricated using this invention. To combine the covert data with a visible image can be desirable to hide the data more effectively. This can be accomplished during the mastering process by interlacing the fringes of the security hologram 3 with the fringes for the visible hologram 3 using a tiling interleaving which has a higher spatial sampling than the data sampling. This type of interlacing is well understood by those skilled in the art of surface relief hologram design.

One embodiment of the method described in this invention is the construction of a covert currency security hologram 1 composed of fringe patterns 3 of a spatial frequency high enough that electromagnetic radiation (light) with a wavelength longer than a particular design value is not diffracted from those fringes, while electromagnetic radiation with a wavelength shorter than the design value is diffracted from these fringes. In the preferred embodiment, the security hologram comprises fringe patterns 5 of a spatial frequency high enough that visible light is not diffracted from those fringes, while light in another region of the electromagnetic spectrum is diffracted from these fringes, producing a situation in which the light that is diffracted from the covert security hologram 1 is invisible to the human eye.

In the described embodiment, the fringe patterns 5 constituting the covert hologram are multiplexed with the fringe patterns 4 constituting a visible image hologram, such that a visible image is apparent to a human viewer, while the covert security hologram is invisible to a human viewer. In the described embodiment, the fringe pattern 5 constituting the covert hologram comprises a spatial frequency that diffracts light from the ultraviolet band of the electromagnetic spectrum, while not diffracting light from the visible band of the spectrum. The spatial frequency preferred for achieving the preferred embodiment is >5000 lines/mm. In further embodiments, the light diffracted from the security hologram 1 is in other regions of the electromagnetic spectrum that are invisible to the human eye. In one embodiment, the hologram(s) 1 are written using surface relief structures on a thermoplastic foil medium. In other embodiments, the holograms are 1 written in any material that can physically reproduce the desired holographic fringe patterns. In the described embodiment, a data pattern having a modulation of the fringe pattern 3 is encoded into the covert security hologram 1 in the fabrication process, and the data pattern is imposed on the diffracted light produced when the hologram is illuminated with light from the region of the spectrum for which the fringe pattern was designed.

The use of the optical reading system 6 described in this invention for writing security holograms is similar to those contemplated for holographic data storage. The combination of designing the security hologram fringe spacing to diffract only invisible light and to require a tilted-plane imaging system to reconstruct the data is very secure. The systems shown below use transmissive elements to image but reflective imaging systems are equally suitable.

The data to be stored can be arranged for readout in a line, a bit by bit, bit by bit but parallel independent streams, bar code, or pagewise. Examples include storing the data in a fashion similar to CD or DVD bit patterns holographically, reading out a line of bar codes in parallel with a line detector, or a 2D data pattern readout out in parallel by imaging or line by line by using a line detector and moving the hologram in with respect to the optical system 6. The data would have error correction, channel modulation and timing/servo marks recording into the hologram with the data.

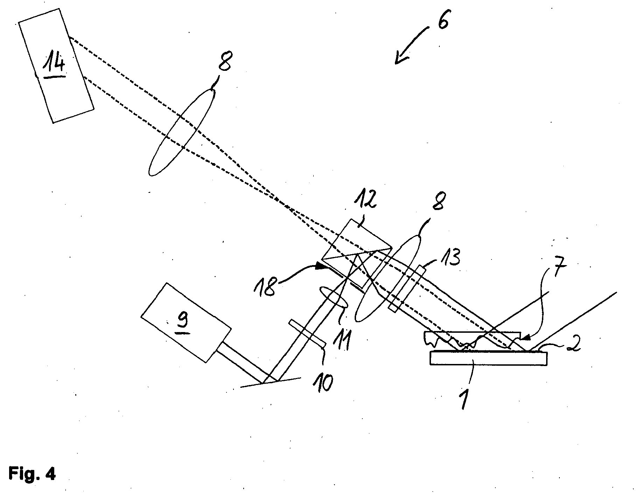

For any of the data arrangements, a physical encoding approach can be employed to further complicate the reconstruction of the holographically stored data. The encoding method consists of designing an optical phase distribution which is superposed with the data fringe pattern, and which is intended to be reversed during the data reconstruction process. When this method is employed to encode the data hologram 1, the reader system 6 must employ an optical phase element 7 shown in Fig. 4 in the reconstruction path whose phase distribution reverses the phase distribution that was initially superposed with the data hologram 1, resulting in proper reconstruction of the data pattern. An optical system which does not successfully reverse this physical phase encoding will not be able to reconstruct the encoded data pattern.

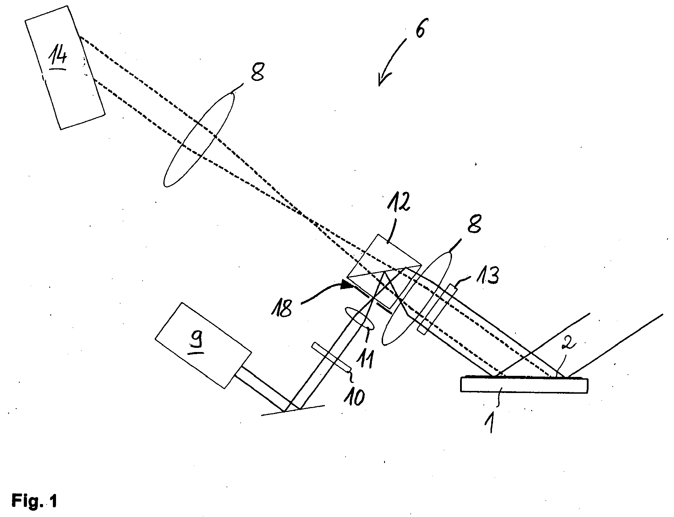

One embodiment of a tilted-plane reader system 6 for invisible data holograms 1 is shown in Fig. 1, which shows a reader system 6 with spherical optics in form of two spherical lenses 8 and a 2-dimensional output. This embodiment for the reader system 6 employs ultraviolet (UV) light of an UV laser 9 to accomplish the readout of the hologram 1 whose fringes 5 are designed to diffract only these wavelengths. The UV light (full line) is coupled through an 1/2 waveplate 10, focusing lens 11 and a spatial filter 18 into a beam splitter 12. The beam splitter 12 directs the UV light through one of the spherical lenses 8 and another 1/4 waveplate 13 to the hologram layer 2 of the hologram 1.

This approach requires stopping (or slowing) the hologram 1 briefly to capture a 2-dimensional image of the diffracted beem (dashed line) passing through the 1/4 waveplate 13, the first spherical lens 8, the beam splitter 12 and the second spherical lens 8 on the output camera 14 being e.g. a CMOS camera. If magnification is desired for pixel-matching between the input and output planes, the telescope approach will be able to implement that requirement. The 2-dimensional output approach will probably have tighter rotational requirements on the detector array (camera 10) than would be the case using a linear array. The system layout which is illustrated employs collinear reference beam illumination (full line) and diffracted data beam (dashed line) reconstruction, which is a layout which minimizes the required optical elements. The reference beam illumination path can also be separated from the data beam reconstruction path, which may be desired for system considerations.

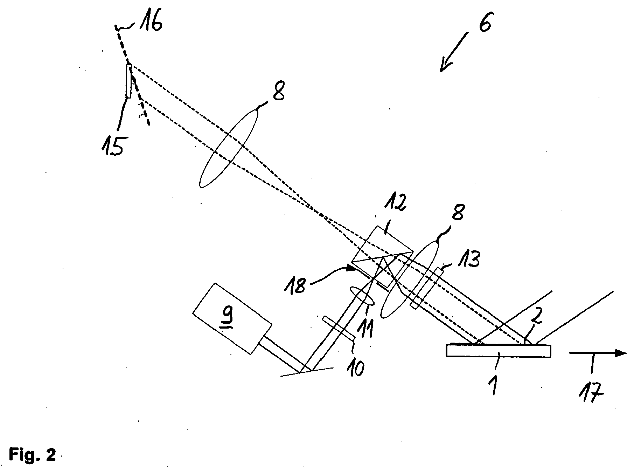

A second embodiment of a tilted-plane reader system for invisible data holograms is shown in Fig. 2, which shows a reader system 6 with spherical optics similar to that of Fig. 1, having however a 1-dimensional linear output. Because of the one-dimensional line focus on the linear output detector array 15, this configuration does not have to be oriented as critically as the data page system according to Fig. 1 in order to achieve focused operation upon reconstruction. The preferred embodiment for this reader system 6 employs as well UV light to accomplish the readout of the hologram 1 whose fringes have been designed to diffract only these wavelengths. In Fig. 2, the tilted image plane 16 of the reconstructed data image (bar codes) is illustrated, and the linear detector 15 will sample the bar codes as they move past. This approach requires continuous or stepped motion 17 of the input hologram 1 in the direction indicated by the arrow past the center of the illuminating beam. If magnification is desired for pixel-matching between the input and output planes, the telescope approach will be able to implement that requirement.

This approach is not as light efficient as using a line focus to illuminate the hologram 1, but with the correct sizing of the collimated beam, it is sufficient. The hologram 1 might be pressed against a roller to make it flat as it is moved through the reader system 6. The system layout which is illustrated employs a collinear reference beam illumination and diffracted data beam reconstruction, which is a layout which minimizes the required optical elements. The reference beam illumination path can also be separated from the data beam reconstruction path, which may be desired for system considerations.

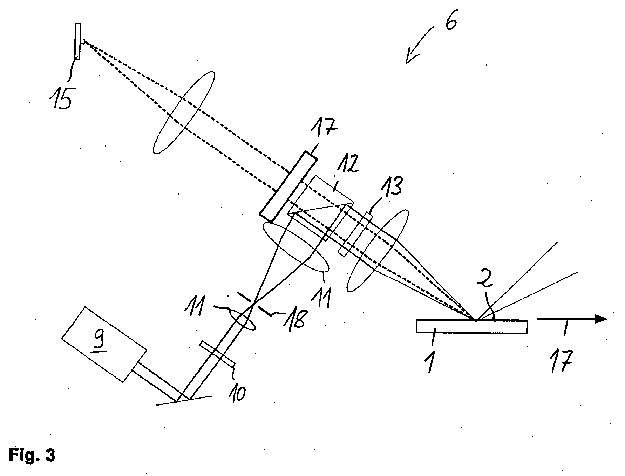

A third embodiment of a reader system 6 for invisible data holograms is shown in Fig. 3, which shows a reader system 6 with spherical and cylindrical optics having as well cylindrical lenses 17 and a 1-dimensional linear output. Generally, the arrangement of the optical elements is similar to the systems 6 as described above. In the UV-light beam, there is one more lens 11 in front of the beam splitter 12, and the spatial filter 18 has been moved away from the beam splitter 12.

Because of the 1-dimensional line focus illuminating the hologram 1 and the one-dimensional line focus on the output detector array 15 achieved by the cylindrical lenses 17, this configuration does not have to be oriented as critically as the data page system in order to achieve focused operation upon reconstruction. The described embodiment for this reader system employs UV light to accomplish the readout of the hologram 1 whose fringes have been designed to diffract only these wavelengths. This approach requires continuous or stepped motion 17 of the input hologram 1 past the center of the illuminating beam, and the linear output detector 15 will sample the bar codes as they move through the illuminating beam. If magnification is desired for pixel-matching between the input and output planes, the telescope approach will be able to implement that requirement. This approach could be light efficient compared to the system 6 illustrated in Fig. 2. The system layout which is illustrated employs collinear reference beam illumination and diffracted data beam reconstruction, which is a layout which minimizes the required optical elements. The reference beam illumination path can also be separated from the data beam reconstruction path, which may be desired for system considerations.

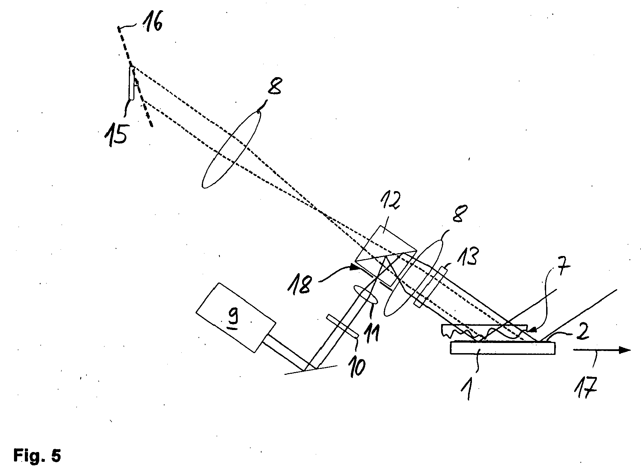

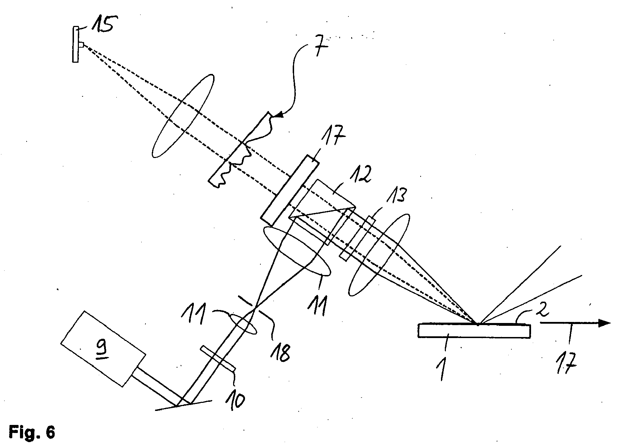

Fig. 4, 5, and 6 illustrate optical reader systems 6 with one embodiment each of a phase element 7 in the reconstruction path. Fig. 4, 5, and 6 correspond to the descriptions of Fig. 1, 2, and 3, with the addition of the optical phase element 7 in the data reconstruction path. As with the previously described optical systems 6, the systems 6 in Fig. 4, 5, and 6 are illustrated with collinear reference beam illumination and diffracted data beam reconstruction, which is a layout which minimizes the required optical elements. As with the previously described systems 6, the reference beam illumination path can also be separated from the data beam reconstruction path, which may be desired for system considerations.

For the high-covertness hologram configuration, a tilted-plane imaging system is desired. A single-lens imaging system produces a magnification which varies as a function of image position for a tilted plane. However, this would partially or completely defeat the ability to recall page code data, as well as create difficulty in aligning the camera to the image.

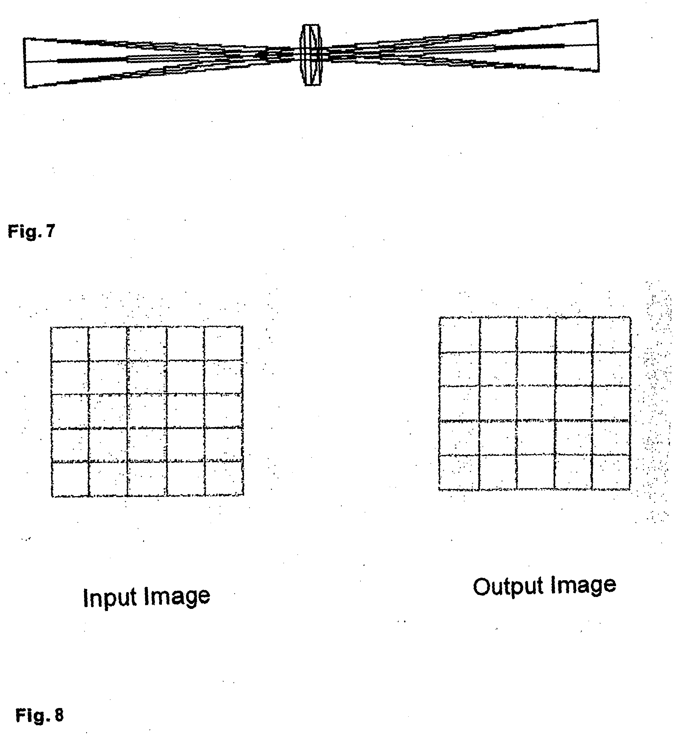

Recognizing these potential problems and further understanding tilted plane reading and imaging systems, the inventors used the Zemax ray-tracing program to model a single-lens imaging system used for parallel plane imaging wherein the object plane is parallel to the image plane as shown in Fig. 7. Fig. 8 depicts a grid input object and the resulting grid output image, demonstrating unity-magnification imaging for this case.

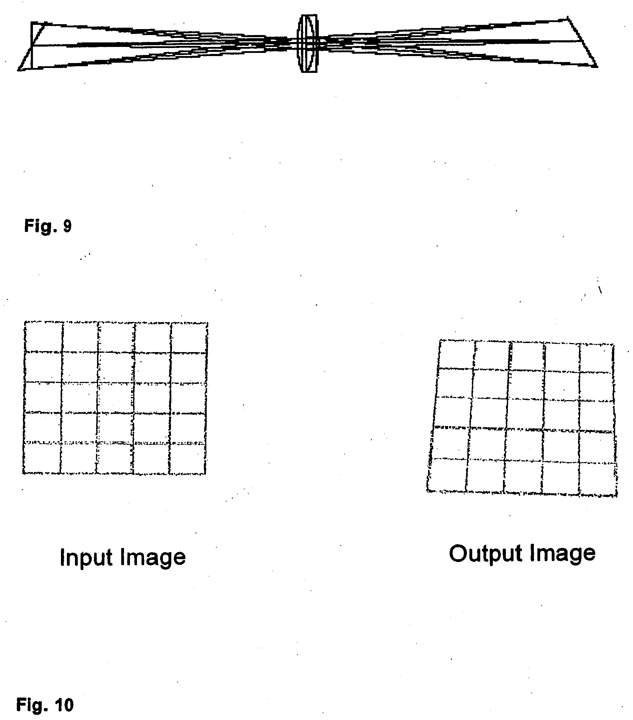

Fig. 9 illustrates the single-lens imaging system applied to the high-covertness foil image plane, in this case tilted at a 35 degree angle from the normal. The left portion of Fig. 10 shows an input grid of optical sources on the tilted object plane, a situation similar to the hologram readout situation. The right portion of Fig. 10 shows the output image of the same grid, projected on a 35 degree tilted-plane, and the position-dependent magnification is apparent in the distortion of the grid in the image plane. Thus, it has been verified by these simulations that a single-lens imaging system distorts tilted planes, and therefore generally should not be used for two-dimensional reconstruction of the high-covertness hologram design.

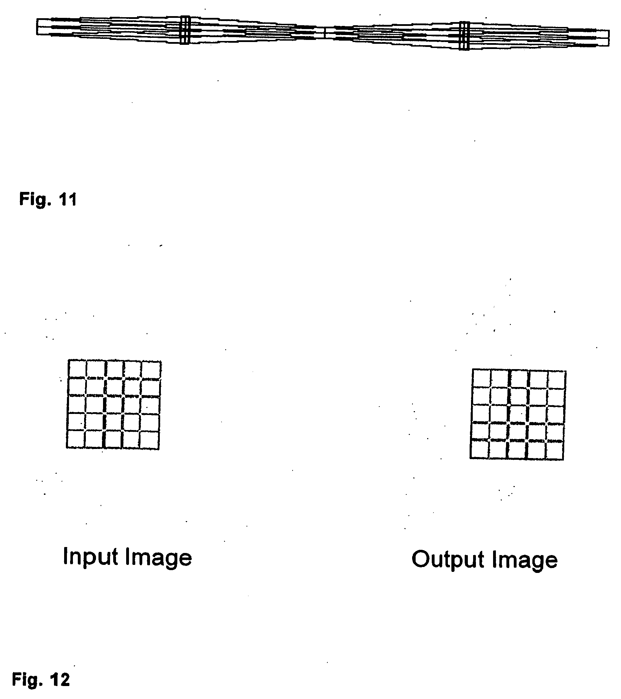

An optical system 6 that could produce distortion-free imaging of object tilted planes onto image tilted planes could be a two-lens telescope of any magnification, as generally shown in Fig. 1 to 6. Preferably, a 1:1 magnification is desired for the imaging systems of this invention. Further, a two-lens unity magnification telescope for use in a reader system 6 has been considered. Fig. 11 shows a two-lens telescope applied to the parallel plane hologram geometry, with parallel object and image planes. The left portion of Fig. 12 shows the grid of sources on the objects, and the right portion shows the image of this grid, which is reconstructed with no magnification error.

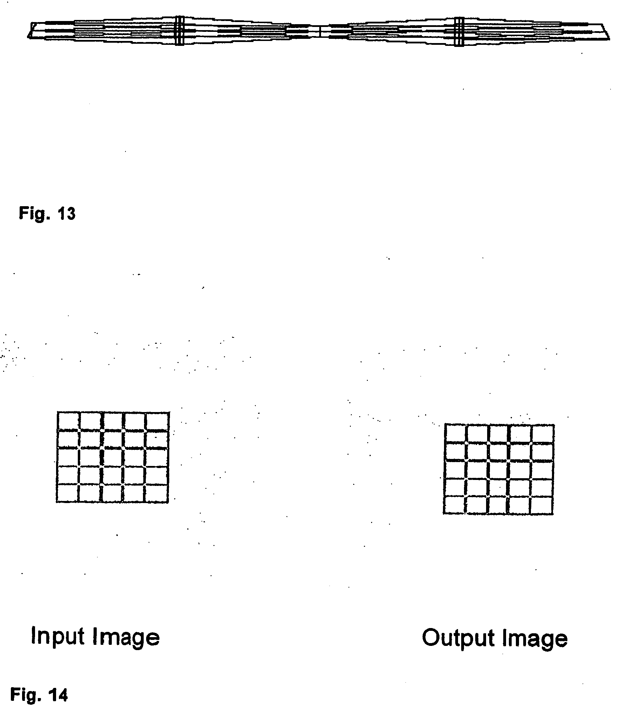

Fig. 13 shows the same two-lens telescope applied to the tilted object and image planes of the high-covertness hologram 1. Fig. 14 depicts the input object and output image planes of the high-covertness data hologram 1, in this case successfully imaged without position-dependent magnification. This system simulation confirms that a unity-magnification two-lens telescope could image both the parallel plane and tilted plane high-covertness hologram geometries without distortions.

For the two-lens unity-magnification telescope as optical imaging system 6 for the reader, a test system 19 has been established having reader system 6 similar to the systems presented in Fig. 1 to 6 and not described in detail here for testing the motion-control hardware and software and the imaging according to the present invention. For testing reasons, an additional camera system 20 was established. With this test system 19, first the parallel plane geometry, and then the tilted-plane geometry high-covertness holograms 1 have been tested.

Due to the high tilt angles required for the high-covertness holograms, the inventors used a long focal length set of lenses to prevent mechanical interferences between the telescope and the beamsplitters 12 and/or CMOS imager 10. Custom software algorithms were written to control the hardware to align the camera 10 to the data page, and Reed-Solomon error-correcting codes, which are an error-correction encoding which allows tolerance for some number of bit errors by adding information to the raw information, and then confirming that the extracted data and overhead information produce the correct verification summations, were implemented to record raw and corrected data rates from the bar code section of the data page. These are well-know approaches that were implemented to demonstrate their utility in this application and are part of the present invention for covert surface hologram design, fabrication and optical reconstruction for security applications.

### List of reference numerals:

- 1: surface relief holographic recording medium, hologram
- 2: surface relief hologram layer
- 3: multiplexed image pattern, fringe pattern
- 4: horizontal fringes
- 5: vertical fringes
- 6: optical system, reader system
- 7: optical phase element
- 8: spherical lens
- 9: UV laser
- 10: 1/2 waveplate
- 11: focusing lens
- 12: beam splitter
- 13: 1/4 waveplate
- 14: output camera
- 15: linear output detector array
- 16: tilted image plane
- 17: cylindrical lens
- 18: spatial filter
- 19: test system
- 20: camera system

## Claims

1. Surface relief holographic recording medium, in particular a foil, comprising digital data, wherein the holographic recording medium is a holographic material for recording surface relief holograms (1), in particular by providing a fringe pattern (3), **characterized in that** the digital data are recorded with a holographic fringe period being sufficiently small such that the diffracted light from the digital data cannot be seen by human eye.

2. Surface relief holographic recording medium according to claim 1, **characterized in that** the digital data is patterned in a two-dimensional page format, in particular as a two-dimensional image, as a full page of digital data or as a series of digital data readable by a scanner.

3. Surface relief holographic recording medium according to claim 1 or 2, **characterized in that** the digital data are encoded, in particular using a reference beam which is not a plane wave.

4. Surface relief holographic recording medium according to any of the previous claims, **characterized in that** the digital data are reconstructable only by UV light.

5. Surface relief holographic recording medium according to any of the previous claims, **characterized in that** multiple data sections (4, 5) for storing the digital data and/or other information are provided in the holographic recording medium (1), the other information being in particular visible to the human eye

6. Surface relief holographic recording medium according to claim 6, **characterized in that** the digital data is multiplexed in substantially a same location as that of an image hologram visible to human eye.

7. Surface relief holographic recording medium according to any of the previous claims, **characterized in that** the surface relief holographic medium is comprised in an article, in particular a document, a card, a merchandise or a banknote.

8. Surface relief holographic recording medium according to claim 7, **characterized in that** the article of comprises a substrate layer, a transparent protective layer overlaying the holographic recording medium, a laminating layer overlaying the protective layer and/or modulation marks for timing and/or positional servo.

9. Optical system for reading the digital data contained in particular in a surface relief holographic medium (1) according to any of claims 1 to 8 having a light source (9) for illuminating the hologram (1) and a detector (14, 15) for diffracted data beam reconstruction, **characterized in that** the light of the light source (9) is invisible to the human eye.

10. Optical system according to claim 9, **characterized in that** the optical system (6) comprises a combination of cylindrical and/or spherical imaging optical elements (8, 17).

11. Optical system according to claim 9 or 10, **characterized in that** the optical system (6) comprises a spherical afocal telescopic system.

12. Optical system according to claim 11, **characterized in that** the afocal telescopic system comprises two spherical optical lens groups, positioned physically to bring the focal positions of the two spherical optical lens groups into coincidence.

13. Optical system according to any of claims 9 to 12, **characterized in that** the optical system (6) comprises a tilted plane imaging system.

14. Optical system according to claim 13, **characterized in that** the tilted plane imaging system is configured so that the input image and the output image are substantially distortion-free.

15. Optical system according to claim 13 or 14, **characterized in that** a readout beam of the input image is substantially parallel to a data diffraction beam of the output image and/or a specular reflection beam of the reconstruction beam is at an angle with respect to the data diffraction beam.

16. Optical system according to any of claims 9 or 15, **characterized in that** the optical system (6) comprises an encoded beam readout (7).
